(19) Europäisches Patentamt
European Patent Office
Office européen des brevets

(11) Publication number: **0 385 644 A1**

# (12) EUROPEAN PATENT APPLICATION

(21) Application number: **90301851.3**

(22) Date of filing: **21.02.90**

(51) Int. Cl.[5] **H04B 10/20, H04J 3/00, H04Q 3/00**

(30) Priority: **28.02.89 US 316881**

(43) Date of publication of application: **05.09.90 Bulletin 90/36**

(84) Designated Contracting States: **BE DE DK ES FR GB IT NL SE**

(71) Applicant: **AMERICAN TELEPHONE AND TELEGRAPH COMPANY**
**550 Madison Avenue**
**New York, NY 10022(US)**

(72) Inventor: **Azizi, Alireza**
**211 Yacht Club Way, Apt. 101**
**Redondo Beach, California 90277(US)**
Inventor: **Korotky, Steven K.**
**1084 Cavan Drive**
**Toms River, New Jersey 08753(US)**

(74) Representative: **Buckley, Christopher Simon Thirsk et al**
**AT&T (UK) LTD. AT&T Intellectual Property Division 5 Mornington Road**
**Woodford Green, Essex IG8 OTU(GB)**

## (54) Clock distribution arrangement for time-multiplexed switched optical network.

(57) In an optical time-multiplexed switched communication system, a master clock signal is distributed optically to subscribers (10,11,12,13) via a central switch (20). The switch (20) modulates a portion of an optical data signal with a representation of the master clock signal prior to its broadcast to a selected subscriber. Several different embodiments of the switch are described for modulating contiguous bit positions reserved within the optical data signal. One embodiment is described for continuously modulating the envelope of the optical data signal with a low amplitude representation of the master clock signal. All embodiments of the switch eliminate both the need for a separate network for broadcasting the master clock signal to subscribers and the need for allocating a specific wavelength to broadcast the master clock signal.

FIG. 1

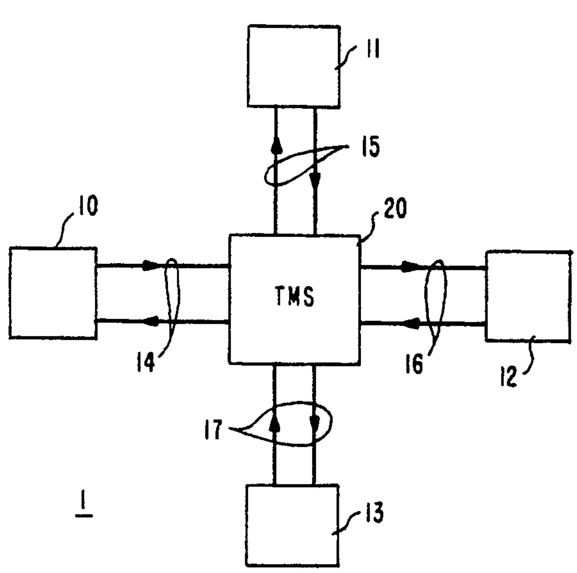


EP 0 385 644 A1

# CLOCK DISTRIBUTION ARRANGEMENT FOR TIME-MULTIPLEXED SWITCHED OPTICAL NETWORK

## Technical Field

This invention relates to optical communication systems and, particularly, to distribution of a master clock signal to subscribers within an optical communication system.

## Background of the Invention

Optical fiber communication systems have been gaining greater acceptance for providing broadband communications among a number of high capacity digital terminals such as PBX's, computers and central office switches. In general, these applications employ switching constraints such as time-multiplexing or scheduled time-multiplexing which are especially suited to block formatted data. Switched bandwidth on the network is virtually unlimited and thereby accommodates high data rates as well as changes in data rates.

In a time-multiplexed network, an optical switch serves as the hub providing full connectivity for a plurality of subscriber terminals. Each subscriber terminal is physically connected to the optical switch. Pairs of optical fiber or a single bidirectional fiber permit bidirectional communication between subscriber terminals and the switch. Duration and sequence of interconnections which are required to allow full connectivity between subscriber terminals are established a priori and constitute a frame. While the structure of a frame is considered fixed as it is repeated from one interval to the next, it may be desirable to negotiate changes in the duration or sequence of connections as data traffic needs arise.

For optical communication networks such as time-multiplexed networks, synchronization of a local oscillator at a subscriber terminal to the master clock signal is an important consideration. The importance of synchronization is increased as data rates approach several Gbps. At the switch, the master clock directs operation of crosspoints to establish frame (time slot) location. In the transmitter portion of a subscriber terminal, the clock ensures that the optical data signal directed to the switch arrives at the proper time with respect to the cycle of the switch, that is, the frame. In the receiver portion of the subscriber terminal, the clock determines valid periods for decision-making in the data recovery process. To this end, some form of clock distribution is necessarily employed in time-multiplexed switched networks to ensure that the same clock is used by the switch as well as each transmitter and receiver in a subscriber terminal.

Several approaches for distribution of the master clock signal have been previously proposed. In one approach, a separate network apart from the data communication network is established for providing a replica of the master clock signal to every subscriber terminal. According to another approach, the master clock signal is transmitted to each subscriber terminal on an optical wavelength which is separately distinguishable from the wavelength used for data transmission. Neither approach offers a satisfactory solution with respect to either equipment utilization or available bandwidth utilization. In the former approach, the data communication network is effectively duplicated to provide a clock distribution; in the latter approach, available data transmission bandwidth is permanently allocated to clock distribution via a frequency multiplexing technique.

## Summary of the Invention

Efficient utilization of existing system elements and available data transmission bandwidth are achieved in an optical time-multiplexed switched communication system wherein a master clock signal is distributed optically to subscribers via a central switch. In accordance with the principles of the present invention, the switch modulates a portion of an optical data signal with a representation of the master clock signal prior to its broadcast to a selected subscriber.

Several different embodiments of the switch permit modulation of contiguous bit positions reserved within the optical data signal for providing the representation of the master clock signal. One embodiment is described for continuously modulating the envelope of the optical data signal with a low amplitude representation of the master clock signal. All embodiments of the switch eliminate the need for a separate network for broadcasting the master clock signal to subscriber terminals.

## Brief Description of the Drawing

The present invention, together with its features and advantages, may be more readily understood from the following detailed description taken in conjunction with the accompanying drawing of several illustrative embodiments, in which:

FIG. 1 illustrates a simplified optical time-multiplexed switched network;

FIG. 2 shows a 4x4 Banyan switch architecture as an embodiment of the switch in FIG. 1;

FIG. 3 shows the relationship of time slots, guardbands and frames with coupler biasing to provide time-multiplexed switching and full connectivity among the subscriber terminals;

FIG. 4 discloses an exemplary embodiment of subscriber terminal 10;

FIG. 5 shows the relationship of optical data signals with the supplied signal from master clock signal generator circuit for the network disclosed in FIG. 6;

FIG. 6 shows a switching arrangement for an exemplary time-multiplexed switched network providing clock distribution in accordance with the principles of the present invention; and

FIG. 7 shows an alternative relationship of optical data signals with a supplied, continuous, low amplitude clock signal from the master clock signal generator circuit for the network disclosed in FIG. 6.

## Detailed Description

Optical time-multiplexed switched network is shown in simplified block diagram form in FIG. 1. Subscriber terminals 10, 11, 12, and 13 are connected by a two-way lightwave transmission medium to time-multiplexed switch 20. Specifically, pairs of optical fibers are employed as the lightwave transmission medium between the subscriber terminals and the switch in the example shown in FIG. 1. Optical fiber pairs 14, 15, 16, and 17 connect subscriber terminals 10, 11, 12, and 13, respectively, to time-multiplexed switch 20.

Subscriber terminals include computers, modems, PBX's, central office switches, and the like. Apparatus is well known in the art for interfacing such traditional electronic apparatus to an optical data link as illustrated in FIG. 1.

Switch 20 may have any architecture such as crossbar, Banyan, dilated Benes or the like. Since the time-multiplexed nature of the switch provides a pre-scheduled interconnection pattern, it is not necessary to utilize the crossbar architecture which has a strictly non-blocking characteristic.

A more suitable architecture for switch 20 is that provided by the Banyan network shown in FIG. 2 wherein the necessary connectivity is provided with the fewest number of crosspoints, namely, $(N/2)\log_2 N$ where N is the number of subscriber terminals. An advantage of the Banyan architecture is that it provides a lower level of crosstalk than in the crossbar architecture. The switch shown in FIG. 2 is depicted as a 4x4 Banyan switch comprising an optical polarizers 21, 22, 23 and 24 at the input ports and traveling wave, reversed $\Delta\beta$ directional couplers 25, 26, 27 and 28 at the crosspoints. In an example from experimental practice, switch 20 is realized in a $LiNbO_3$ device with Ti-diffused waveguides wherein the directional couplers and proton-exchange polarizers are integrated on the same substrate. Individual elements of the switch as described above and their fabrication techniques are well known in the art through technical literature and patents by R. C. Alferness, for example. Such switches have optical insertion losses of approximately 3 dB and response times on the order of 100 ps. It is contemplated that switches similar to the one shown in FIG. 2 may be realized to a dimensionality of 100x100 for the $LiNbO_3$ system or a Group III-V or II-VI semiconductor system such as AlGaAs/GaAs, InGaAsP/InP, GaAsSb/GaSb or the like.

As shown in FIG. 2, subscriber terminals 10 and 11 are connected through signal polarizers 21 and 22, respectively, to directional coupler 25. Polarizer 21 couples to a first port of coupler 25 via lead 33, while polarizer 22 couples to a second port of coupler 25 via lead 34. Similarly, subscriber terminals 12 and 13 are connected through signal polarizers 23 and 24, respectively, to directional coupler 26. Polarizer 23 couples to a first port of coupler 26 via lead 35, while polarizer 24 couples to a second port of coupler 26 via lead 36. The output ports of directional couplers 25 and 26 are connected to the input ports of directional coupler 27 and 28 as follows: the first output port of coupler 25 is connected to the first input port of coupler 27 via lead 29, the second output port of coupler 25 is connected to the first input port of coupler 28 via lead 30, the first output port of coupler 26 is connected to the second input port of coupler 27 via lead 31, and the second output port of coupler 26 is connected to the second input port of coupler 28 via lead 32.

In this arrangement, the directional couplers may be operated by appropriate electrical biasing techniques to be in either a straight-through (=) state or a cross (x) state so that optical data signals from one subscriber terminal may be routed to the correct other subscriber terminal. For example, when all couplers are biased to be straight-through (=), the optical data signals from subscriber terminals 10, 11, and 12 and 13 arrive at subscriber terminals 10 (loop-back), 12, 11 and 13 (loop back), respectively. Other combinations of coupler states provide full connectivity among subscriber terminals. See FIG. 3 for a table of interconnections and coupler states necessary to provide full connectivity among the subscriber terminals.

In general, full connectivity among N subscriber terminals is attained by providing N distinct switch states and, thereby, N time slots within a frame. This partitioning permits a loop back condition wherein a transmitting subscriber terminal can communicate with itself over the time-multiplexed switched network.

As shown in FIG. 3, one exemplary switching scheme provides equal time slots for inter-subscriber transmission within a frame. The time slots include data portions in time periods P1, P2, P3 and P4. Integrated within each time slot is a short guard band to allow for switching the state of the directional couplers. It is contemplated that the guardband be as short as feasible to maintain high network efficiency and provide sufficient time for switch reconfiguration without incurring data loss. In some bit-synchronized systems, the guardband is usually equal to an integer multiple of clock cycles.

FIG. 4 shows an exemplary embodiment of subscriber terminal 10 for operation in a time-multiplexed switched network. As shown, optical data signals related to subscriber terminal 10 are transmitted on and received from optical fiber pair 14. In the receiver portion of subscriber terminal 10, clock information is detected and recovered by clock recovery circuit 44. The clock signal, which is related to a master clock signal, is supplied to data recovery circuit 45 to enable accurate detection and extraction of data from received optical data signals. In the transmitter portion of subscriber terminal 10 the clock signal recovered from clock recovery circuit 44 is supplied to data source and controller circuit 40 for ensuring accurate timing of data signals to be transmitted over the network. Accurately timed data from data source and controller circuit 40 are supplied to modulator 43 via driver 41. Modulator 43 is shown as an external element for modulating lightwave signals from laser 42. The lightwave signals from laser 42 are desirably at a single optical wavelength. Modulation may be directly applied to laser 42 in accordance with well known frequency and amplitude modulation techniques. In the latter case, modulator 43 may be omitted.

It is contemplated that electronic circuitry within data source and controller circuit 40 formats data sequences generated by the subscriber terminal to any format desired for proper network operation. For example, it may be desirable to partially fill the available data portion of a time slot with actual data and leave several contiguous bit positions empty (a logically high or logically low state for NRZ data). The empty contiguous bit positions may be used for clock distribution as will be discussed in more detail below.

In order to better understand the principles of the present invention, FIGs. 5 and 6 are described together. FIG. 5 shows the relationship of optical data signals with the supplied clock signal from the master clock signal generator circuit for the switching arrangement used in the time-multiplexed switched network disclosed in FIG. 6. FIG. 6 shows many of the same elements which were disclosed for switch 20 (FIGs. 1 and 2) in the time-multiplexed switched network. These elements will not be described again below. Rather, attention will be focussed on those additional elements which provide clock distribution in accordance with the principles of the present invention.

The switching arrangement of FIG. 6 includes the elements previously described in FIG. 2 together with master clock generator 60, drivers 61,67 and 62, and modulators 63, 64, 65, and 66. Master clock generator 60 provides a high frequency stable clock reference signal for use in the time-multiplexed switched network. Master clock signals generated by master clock generator circuit 60 is supplied to drivers 61, 67 and 62 for use in the switching arrangement. An exemplary master clock signal frequency may be several GHz.

The clock signals supplied through driver 61 control the switching operation of couplers 25 and 26 as described above. See, for example, the control signals shown in FIG. 3. The clock signals supplied through driver 67 control the switching operation of couplers 27 and 28 as described above. See, for example, the control signals shown in FIG. 3. The clock signals supplied through driver 62 control the operation of modulators 63 through 66.

Modulators 63 through 66 are standard optical waveguide modulators known in the art. See, for example, IEEE J. of Quantum Electronics, Vol. QE-17, No. 6, pp. 946 et seq. (1981). Modulators 63 through 66 receive optical data signals from the output ports of couplers 27 and 28.

In the exemplary embodiment shown, the optical data signals have some portion of each time slot reserved for clock distribution. That is, a portion of the time slot shown herein as the leading several contiguous bit positions 50 is empty. Optical data in one exemplary time slot are conveyed in trailing bit positions 52. Signals from master clock generator 60 via driver 62 include a clock portion 54 corresponding to the pre-established empty portion of the time slot and a blank portion corresponding to the portion of the time slot occupied by optical data. As a result, the electrical clock signal is modulated onto the blank (empty) portion of the time slot accompanying the optical data signal 52 to form an optical distributed clock signal portion 51 and an optical data signal portion 53. Optical distributed clock signal portion 51 includes a signal representative of the master clock signal generally at a frequency integrally related to the master clock signal frequency. Optical data signal portion 53 is generally an exact replica of optical data signal portion 52.

For the arrangement described above, it is contemplated that some portion of each time slot from each subscriber terminal is reserved for including, by modulation in the switching arrangement, an optical representation of a master clock signal. Of course, it is not necessary that the included optical representations of the master clock signal be perfectly aligned in phase. For example, it may be desirable for signals received by some subscriber terminal to be 180° out of phase with the optical representation of the master clock signals received by other subscriber terminals. In yet another arrangement, it is contemplated that only one subscriber terminal reserve a portion of each of its time slots for subsequent inclusion at the switching arrangement of an optical representation of a master clock signal. In this latter arrangement, it is anticipated that the remaining subscriber terminals will use each entire available time slot for transmission of optical data signals.

FIG. 7 shows an alternative relationship of optical data signals with a supplied, continuous, low amplitude master clock signal for the switching arrangement disclosed in FIG. 6 and utilized in the time-multiplexed switched network. In this embodiment, it is understood that no bit positions are reserved for distribution of the representation of the master clock signal. Rather, optical modulators 63 through 66 are used to impress a continuous wave, low amplitude representation of the master clock signal (see signal 72) onto each optical data signal traversing the switch. The impression of the clock signal is realized a small amplitude variations of the envelope of the optical data signal generally at the master clock frequency.

Modulators 63 through 66 are generally chosen from the group interferometric and directional coupler modulated to take advantage of a nonlinear characteristic mode of operation. By advantageously biasing these modulators at a point for maximum transmission (minimum insertion loss), $V_T$ the modulators exhibit a quadratic or frequency doubling characteristic. That is, when the modulators are electrically driven with a continuous wave frequency signal at one half of the master clock frequency, such as signal 72, the optical data signal 71 traversing the modulator is impressed (modulated) with an optical amplitude variation 73 at the master clock frequency. At the receiver portion of each subscriber terminal, it is only necessary to sense and filter the low level tone (optical amplitude variation 73) out of a received optical data signal.

In all the embodiments of the present invention for clock distribution within a time-multiplexed switched network, it is important to note that the distributed clock signal is impressed in the switching arrangement on a portion of

one, some or all optical data signals traversing the switch without the need for an optical-to-electrical conversion.

## Claims

**1.** An optical communication system including first and second terminals for transmitting and receiving optical data signals, a switch connected to said terminals for translating optical data signals from one terminal to another terminal according to a time-multiplexed switching criterion, and means for generating a clock signal related to a master clock frequency, said switch including means responsive to said clock signal for modulating a predetermined portion of the optical data signals from at least said one terminal to include an optical representation of said clock signal.

**2.** The system as defined in claim 1 wherein each optical data signal includes a plurality of bit positions, each said predetermined portion including at least first and second contiguous bit positions of the optical data signal.

**3.** The system as defined in claim 1 wherein said predetermined portion includes an envelope of each optical data signal and wherein said clock signal is a continuous wave signal having a substantially small amplitude offset by a bias potential at a value for causing said means for modulating to exhibit maximum transmission, said clock signal having a frequency at substantially one-half said master clock signal frequency.

**4.** An optical communication system including a first terminal for transmitting optical data signals, a second terminal for receiving said optical data signals, a switch connected to said terminals for translating optical data signals from said first terminal to said second terminal according to a time-multiplexed switching criterion, and means for generating a clock signal related to a master clock frequency, said switch including means responsive to said clock signal for modulating a predetermined portion of the optical data signals from said first terminal to include an optical representation of said clock signal.

**5.** The system as defined in claim 4 wherein each optical data signal includes a plurality of bit positions, each said predetermined portion including at least first and second contiguous bit positions of the optical data signal.

**6.** The system as defined in claim 4 wherein said predetermined portion includes an envelope of each optical data signal and wherein said clock signal is a continuous wave signal having a substantially small amplitude offset by a bias potential at a value for causing said means for modulating to exhibit maximum transmission, said clock signal having a frequency at substantially one-half said master clock signal frequency.

FIG. 1

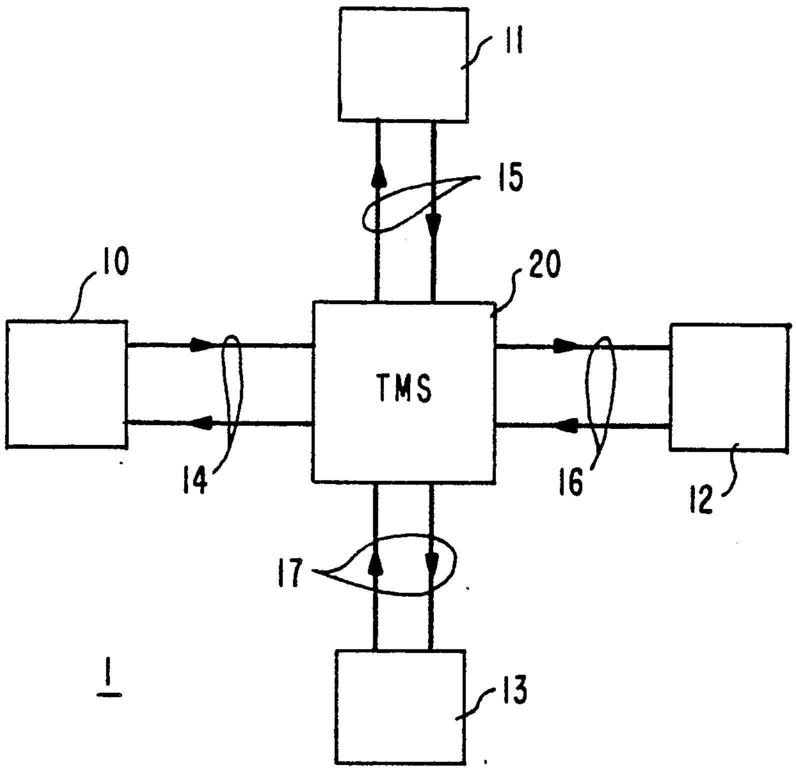

FIG. 2

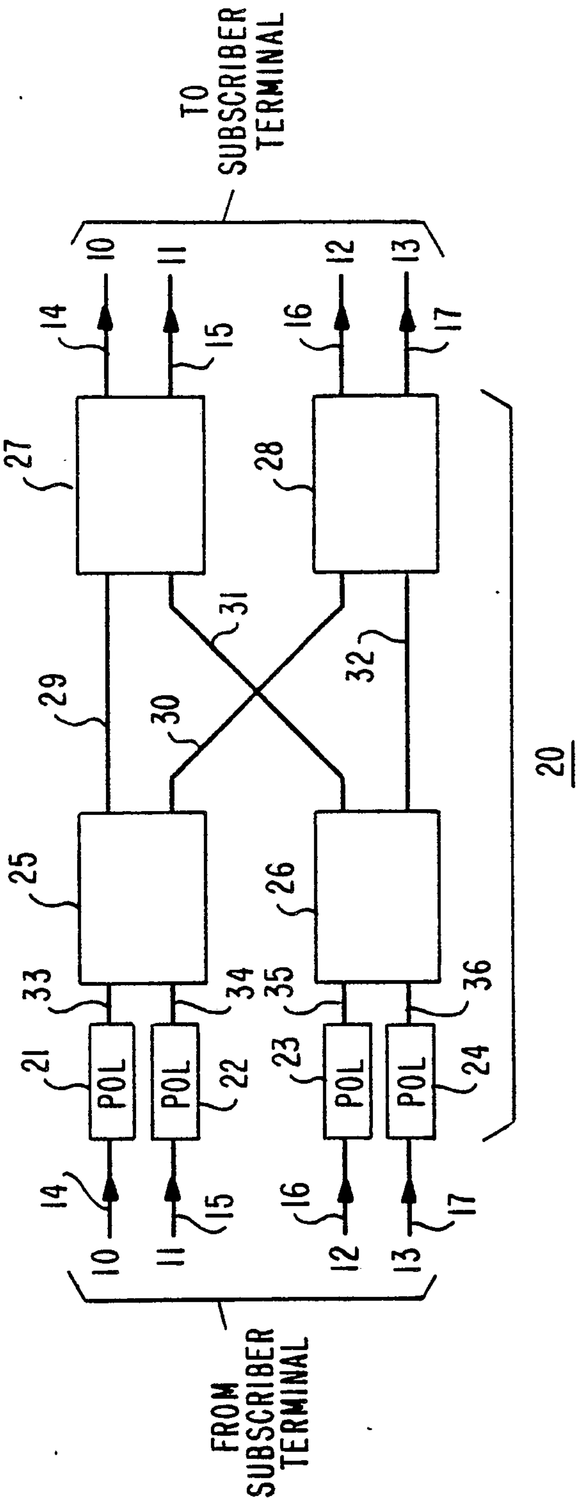
TO SUBSCRIBER TERMINAL
FROM SUBSCRIBER TERMINAL
POL
POL
POL
POL
10
11
12
13
14
15
16
17
20
21
22
23
24
25
26
27
28
29
30
31
32
33
34
35
36

FIG. 3

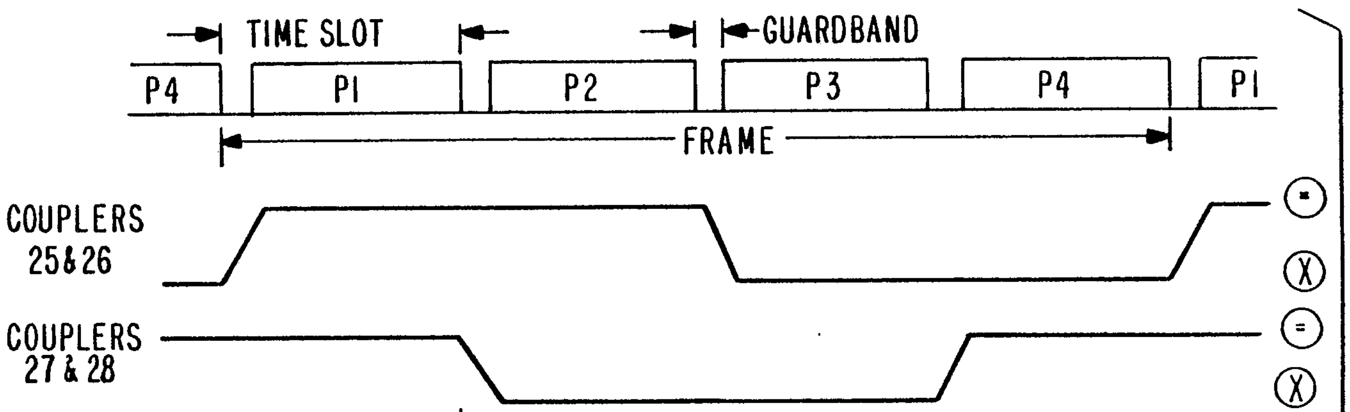


| RECEIVE / TRANSMIT | P1 TIME SLOT | P2 TIME SLOT | P3 TIME SLOT | P4 TIME SLOT |
|---|---|---|---|---|
| TERMINAL 10 | 10 LOOP BACK | 12 | 13 | 11 |
| TERMINAL 11 | 12 | 10 | 11 LOOP BACK | 13 |
| TERMINAL 12 | 11 | 13 | 12 LOOPBACK | 10 |
| TERMINAL 13 | 13 LOOPBACK | 11 | 10 | 12 |

FIG. 4

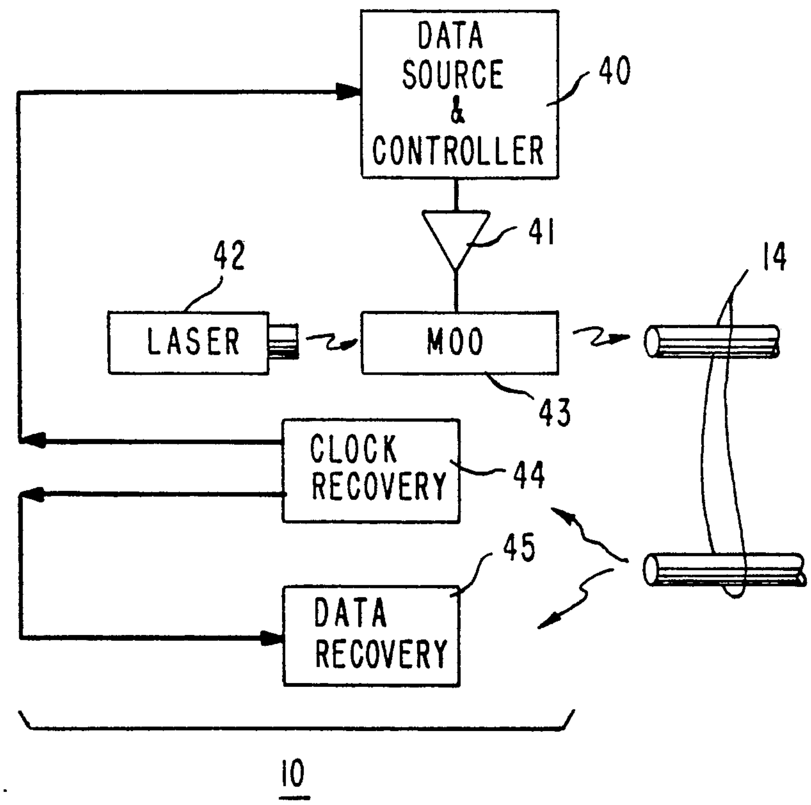
DATA SOURCE & CONTROLLER
40
41
42
LASER
MOD
43
14
CLOCK RECOVERY
44
45
DATA RECOVERY
10

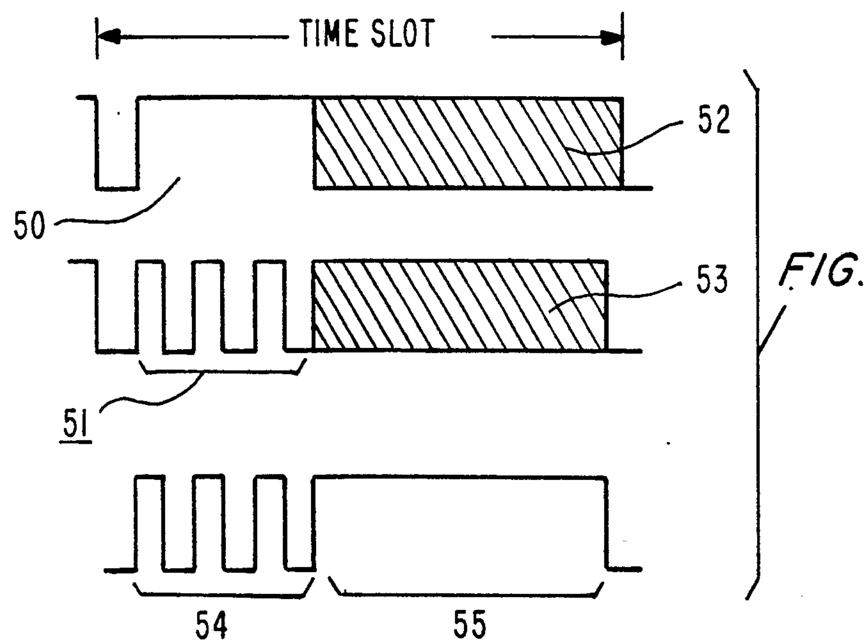
TIME SLOT
52
50
53
51
54
55

FIG.5

FIG. 6

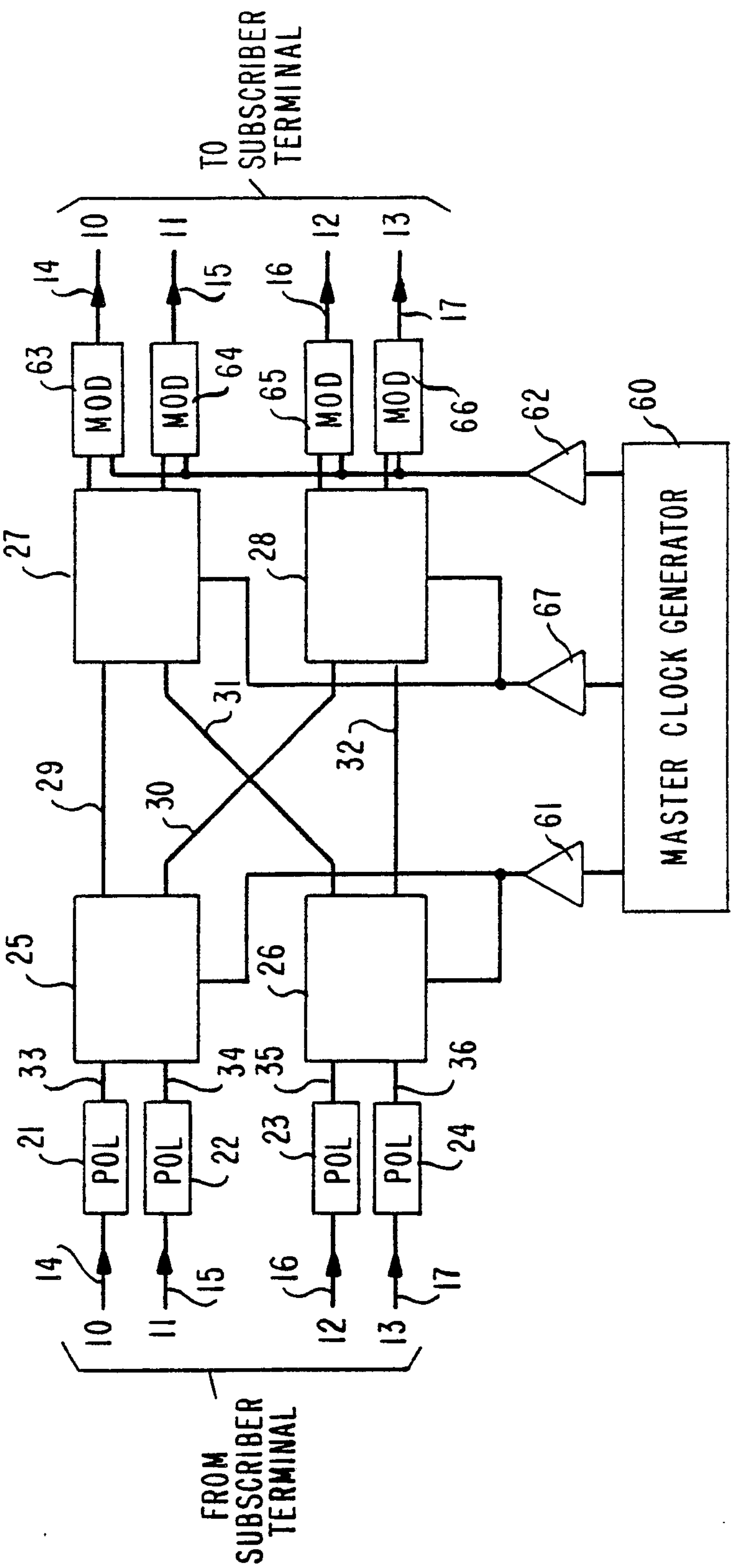
TO SUBSCRIBER TERMINAL
FROM SUBSCRIBER TERMINAL
MASTER CLOCK GENERATOR
MOD
MOD
MOD
MOD
POL
POL
POL
POL
10
11
12
13
14
15
16
17
21
22
23
24
25
26
27
28
29
30
31
32
33
34
35
36
60
61
62
63
64
65
66
67

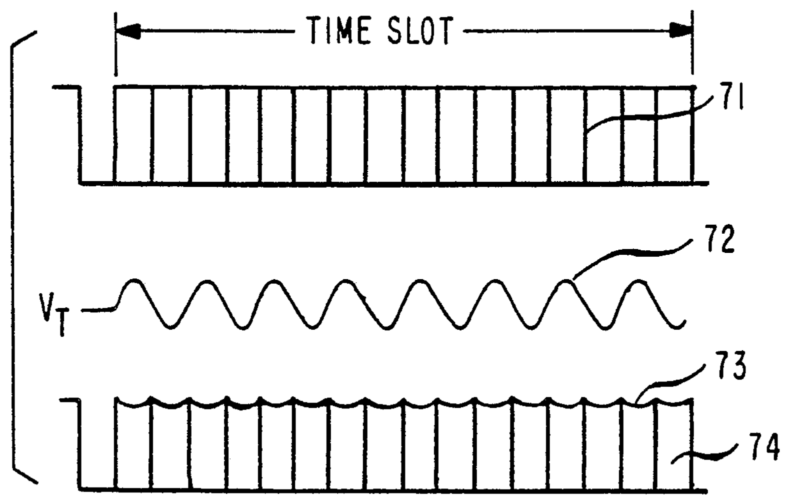


FIG. 7

European Patent Office

# EUROPEAN SEARCH REPORT

Application number

EP 90301851.3

## DOCUMENTS CONSIDERED TO BE RELEVANT

| Category | Citation of document with indication, where appropriate, of relevant passages | Relevant to claim | CLASSIFICATION OF THE APPLICATION (Int Cl 5) |
|---|---|---|---|
| X | US - A - 4 797 951 (DUXBURY) * Fig. 1,3,4; column 2, lines 29-34; column 3, lines 18-20; column 4, line 65 - column 5, line 2 * | 1,4 | H 04 B 10/20<br>H 04 J 3/00<br>H 04 Q 3/00 |
| A | US - A - 4 562 582 (TOKURA) * Fig. 4,6; column 7, lines 12-15 * | 1,4 | |
| A | US - A - 4 736 462 (JOEL) * Fig. 7 * | 1,4 | |

TECHNICAL FIELDS SEARCHED (Int Cl 5)

H 04 B
H 04 J
H 04 Q
H 04 L

The present search report has been drawn up for all claims

| Place of search | Date of completion of the search | Examiner |
|---|---|---|
| VIENNA | 14-05-1990 | DRÖSCHER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document